# FASCICULE DE BREVET EUROPEEN

(11) **EP 1 312 844 B1**
(45) Date de publication et mention de la délivrance du brevet: **01.12.2004**
(21) Numéro de dépôt: 02292685.1
(22) Date de dépôt: 29.10.2002
(51) Int. Cl.: F16K 17/38

(54) **Robinet pour réservoir ou conduit à gaz comportant un levier**
Ventil für Gasbehälter oder Gasleitung mit einem Hebel
Valve for gas tank or gas duct having a lever

(30) Priorité: 14.11.2001 FR 0114711
(43) Date de publication de la demande: 21.05.2003
(73) Titulaire: Briffault S.A., 27610 Romilly-sur-Andelle (FR)
(72) Inventeur: Morel, Marc, 76100 Rouen (FR); Faucon, Michel, 27610 Bourg Achard (FR)
(74) Mandataire: Eidelsberg, Albert

(56) Documents cités:
- EP-A- 0 882 918
- US-A- 4 004 601
- US-A- 4 469 119
- US-A- 5 004 003
- US-A- 5 562 118

## Description

La présente invention se rapporte à un robinet pour un réservoir à gaz. Dans le présent mémoire, on entend par réservoir un réservoir proprement dit, mais aussi un conduit.

On connaît déjà un robinet pour réservoir à gaz, comportant un clapet pouvant prendre deux positions, une position fermée dans laquelle il repose sur un siège empêchant du gaz d'entrer dans le réservoir ou d'en sortir et au moins une position ouverte dans laquelle il n'est pas en contact avec le siège pour permettre au gaz d'entrer dans le réservoir ou d'en sortir, et des moyens d'actionnement du clapet. Un robinet de ce genre est généralement constitué d'une manette rotative ou à quart de tour que l'on tourne pour ouvrir ou fermer le réservoir. Ces bouchons ou manettes doivent nécessairement être en un matériau résistant à l'incendie. En effet, lorsque le feu prend à l'extérieur du réservoir et attaque le robinet, si le matériau dans lequel est réalisé le robinet n'est pas suffisamment résistant à la chaleur, cette manette fond et l'ouverture du réservoir ou du conduit à gaz a lieu avec tous les dangers que cela implique en raison de la mise en contact du gaz contenu dans le réservoir avec une flamme extérieure. En outre, ce type de robinet ne se ferme pas automatiquement lors d'un incendie.

Des brevets US-A-5 562 118et US-A-4004601 on connaît déjà un robinet suivant la préambule de la revendication 1. Ce type de robinet est compliqué et coûteux à fabriquer, comportant de nombreuses pièces au niveau des moyens d'actionnement. En outre, lorsque le système de sécurité a été enclenché, les moyens d'actionnement en fonctionnement normal peuvent encore être actionnés manuellement pour rouvrir le clapet, de sorte qu'il peut arriver par inadvertance ou malchance que du gaz s'échappe du robinet dans des conditions thermiques (le feu) explosives.

L'invention vise à surmonter ces inconvénients en proposant un robinet du genre mentionné ci-dessus qui, par sa structure, permet d'une part d'obtenir un robinet qui se ferme automatiquement lorsque la température devient trop élevée dans l'environnement immédiat du robinet et notamment lorsqu'un incendie se déclare et qui pourtant est plus simple et moins coûteux à fabriquer, et notamment peut avoir des parties en matière plastique tout en étant pourtant plus sûr que les robinets de l'art antérieur.

Suivant l'invention, le robinet est tel que défini à la revendication 1.

Il s'ensuit que, lorsqu'un incendie se déclare au voisinage immédiat du robinet ou lorsque la température y devient trop élevée, la partie qui peut être notamment en matière plastique, alors que le reste des moyens d'actionnement est en métal, fond et le clapet est appliqué sur son siège et interdit aux gaz d'entrer ou de sortir dans le réservoir. Il y a, d'une part, fermeture automatique en cas de température trop élevée et, d'autre part, l'organe de commande peut être réalisé au moins en partie en matière plastique peu coûteuse. En outre le système de sécurité est plus simple, comportant moins de pièces, notamment pour l'actionnement de sécurité en cas d'incendie. En particulier, les moyens d'actionnement en fonctionnement normal font aussi office de système de sécurité en cas d'incendie, sans ajout de pièce(s) supplémentaire(s). Enfin, lorsqu'un incendie s'est déclaré, les moyens d'actionnement ne peuvent plus fonctionner, et par conséquent une ouverture malheureuse (choc d'un objet sur un levier d'actionnement) ou par inadvertance n'est plus possible.

Des perfectionnements font l'objet des sous-revendications.

Suivant un perfectionnement de l'invention, le robinet comporte une surface de butée avec laquelle coopère la partie en matière qui fond, et notamment repose contre cette surface de butée, lorsqu'elle n'est pas fondue.

On obtient ainsi un système particulièrement simple et efficace.

Suivant un perfectionnement de l'invention, il est prévu des moyens de rappel destinés à appliquer le clapet dans la position fermée, mais réglés de manière à laisser le clapet s'ouvrir sous l'action des moyens d'actionnement ayant la partie en matière qui fond lorsqu'elle n'est pas fondue.

La fermeture du robinet est ainsi assurée de manière particulièrement bonne.

Suivant un perfectionnement de l'invention, les moyens d'actionnement comportent une tige, notamment une tige verticale, reliée au clapet et pouvant faire saillie de la surface de butée.

Cette tige permet ainsi une transmission simple et aisée du mouvement des moyens d'actionnement en un mouvement vertical de sortie de siège ou d'entrée sur le siège du clapet.

Suivant un perfectionnement de l'invention, les moyens de rappel sont constitués du poids du clapet.

Le robinet a ainsi une structure très simple.

Suivant un perfectionnement de l'invention, les moyens de rappel comportent un ressort en compression qui est disposé de manière à appliquer le clapet sur le siège.

Suivant un perfectionnement de l'invention, les moyens d'actionnement sont constitués d'un levier monté tournant par rapport à un axe solidaire en translation du clapet, l'axe du levier étant déplacé par la rotation du levier entre deux positions, une position dans laquelle le clapet est en la position ouverte et une autre dans laquelle il est en la position fermée.

Suivant un mode de réalisation préféré de l'invention, le robinet comporte également un bouchon traversé par la tige et recouvrant le clapet, la surface supérieure du bouchon étant sensiblement plane et constituant la surface de butée.

Suivant un mode de réalisation préféré de l'invention, le levier comporte une surface de roulement, notamment une surface de roulement cylindrique, cette surface cylindrique roulant sur la surface plane supérieure du bouchon pour faire passer le levier de la position fermée à la position ouverte ou réciproquement.

Suivant un mode de réalisation préféré de l'invention, la position de l'axe du levler en la position fermée est plus basse par rapport au clapet que la position de l'axe du levier en la position ouverte.

Suivant un mode de réalisation préféré de l'invention, les deux positions de l'axe en la position ouverte et en la position fermée respectivement sont alignées avec l'axe longitudinal de la tige.

On décrit maintenant uniquement à titre d'exemple un mode de réalisation préféré de l'invention à l'aide des dessins annexés dans lesquels :
la figure 1 est une vue en coupe longitudinale d'un robinet suivant l'invention représentant en traits pleins la position du levier en la position fermée et par des successions de traits et de points la position du levier en la position ouverte ; et
la figure 2 une vue en coupe de côté de la figure 1, le levier étant partiellement arraché.

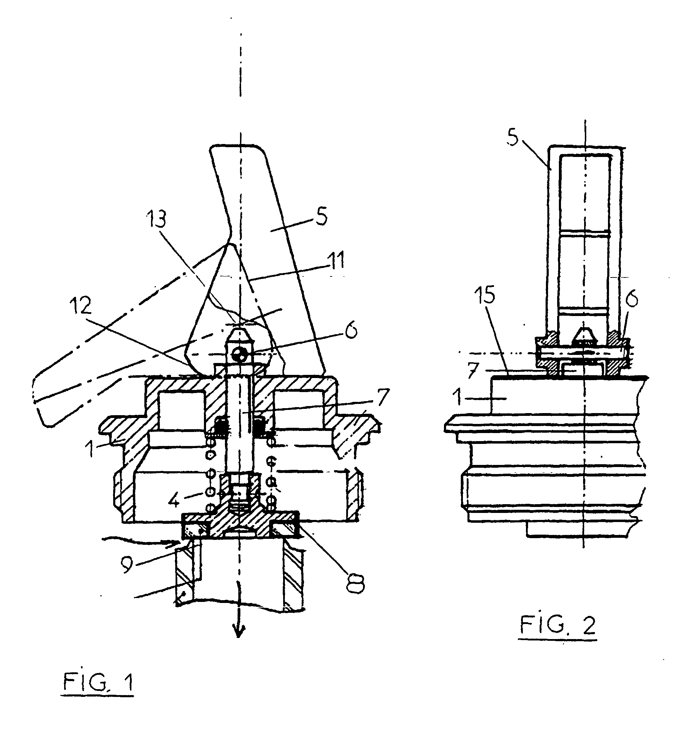

A la figure 1 il est représenté une vue en coupe d'un robinet suivant l'invention. Un clapet 8 est monté au-dessus de l'ouverture d'un conduit 9 menant à un réservoir de fluide (non représenté), notamment du gaz naturel. Les dimensions du clapet 8 sont réalisées de manière à ce qu'il puisse s'appliquer d'une manière étanche sur le siège formé par l'ouverture du conduit 9. Le clapet 8 est recouvert d'un bouchon 1. Ce bouchon 1, de forme sensiblement cylindrique, est traversé de haut en bas par un trou longitudinal par lequel passe une tige 7. La tige 7 est fixée au clapet 8 dans la partie supérieure du clapet par, par exemple, un système à vis. Un ressort 4 en compression est également monté entre la surface intérieure du bouchon et la surface supérieure du clapet. La surface supérieure extérieure du bouchon 1 est sensiblement plane. La tige 7 fait saillie à l'extérieur de la surface extérieure plane du bouchon 1. Elle est fixée à un axe 6 orthogonal d'un levier 5. La surface extérieure, notamment en coupe comme vue à la figure 1 du levier, comporte une surface plane 11, qui à l'état fermé du levier, c'est-à-dire à l'état vertical du levier, repose sur la surface plane du bouchon 1. Cette surface plane 11 se prolonge par une surface cylindrique 12, le long de laquelle le levier va rouler et glisser lors de sa rotation dans le sens inverse des aiguilles d'une montre, comme représentée par la flèche à la figure 1.

La position de l'axe 6 du levier 5 par rapport au centre de gravité du levier 5 est décalée vers la gauche à la figure, de sorte que la position du levier en la position fermée, c'est-à-dire verticale comme vu à la figure 1, est stable.

Le levier est en une matière plastique ayant notamment un point de fusion bas, plus bas que celui du reste des moyens d'actionnement comme le bouchon et le conduit qui sont en un même matériau, notamment en Zamak.

Le fonctionnement du robinet est le suivant : En la position fermée du robinet, comme représentée en traits pleins à la figure 1, le levier est en position verticale et l'axe 6 est baissée d'une certaine distance par rapport à sa position dans la position ouverte du levier. Cet abaissement de l'axe 6 entraîne également l'abaissement de la tige 7 avec laquelle il est solidaire, et par conséquent, pousse le clapet 8 contre le siège formé par l'ouverture du conduit 9. En outre, le ressort 4 en compression tend également à pousser le clapet contre son siège. L'ouverture du conduit 9 est ainsi fermée et le gaz ne peut ni pénétrer ni sortir dans le conduit 9 ou hors du conduit 9. Lorsque l'opérateur souhaite ouvrir le conduit 9, pour une raison ou pour une autre, il lui suffit de tourner le levier 5 dans le sens de la flèche représentée à la figure 1 pour amener le levier dans la position représentée en traits et points. La surface extérieure du levier va avoir tendance, d'une part à rouler et glisser au niveau de sa surface circulaire sur la surface plane de la partie supérieure plane du bouchon 1, ce qui va avoir tendance à entraîner vers le haut l'axe 6 mobile en une position haute indiquée par la référence numérique 13 à la figure 1. Le levier est ainsi dans la position ouverte du robinet. La tige a également été entraînée vers le haut par la montée de l'axe 6 ainsi que le clapet 8, malgré la force du ressort 4 qui a une constante de raideur calculée de manière à ne pas empêcher l'ouverture du clapet 8 dans la position haute de l'axe 6, ce qui ouvre l'ouverture du conduit 9.

Dans le cas où le feu prend au voisinage du levier 5 ou de l'extérieur du robinet, notamment lorsque le levier 5 se trouve dans sa position ouverte, celui-ci va fondre car il est en matériau qui fond au-delà d'une certaine température qui est rapidement atteinte, lorsque le feu prend.

Une fois que le levier a fondu, l'axe 6 n'est plus maintenu en hauteur et s'abaisse automatiquement sous l'effet du ressort et/ou de la gravité, ce qui entraîne également la tige 7 vers le bas qui pousse ainsi le clapet contre son siège dans le conduit 9. Le conduit 9 est donc automatiquement fermé et du gaz ne peut pas s'échapper par ce conduit 9 dans le cas d'une élévation accidentelle de la température, notamment dans le cas où un incendie se produit à l'extérieur du robinet.

Le levier 5 est entièrement en matière plastique, qui fond au delà d'une température anormale, par exemple une température qui est dépassée en cas d'incendie. La matière plastique du levier 5 est en contact avec la tige et réalise la liaison entre cette tige et le levier même. lorsque le feu prend cette liaison disparaît et le levier n'a plus de prise sur la tige 7, qui descend automatiquement pour fermer le clapet.

Suivant un autre mode de réalisation, à la place d'un levier, les moyens d'actionnement peuvent être constitués d'un manchon taraudé à l'intérieur et traversé de bas en haut par la tige, celle-ci étant filetée. La partie basse du manchon bute contre un butoir, par exemple la surface 15 supérieure du bouchon 1. Suivant que l'on visse ou dévisse le manchon, la tige monte ou descend et ouvre ou ferme le clapet. Le manchon est en une matière qui fond. Lorsque le manchon fond, la tige lâche prise, tombe et ferme le clapet.

## Revendications

1. Robinet pour réservoir à gaz, comportant un clapet (8) pouvant prendre deux positions, une position fermée dans laquelle il repose sur un siège (9) en empêchant du gaz d'entrer dans le réservoir ou d'en sortir et au moins une position ouverte dans laquelle il n'est pas en contact avec le siège pour permettre au gaz d'entrer dans le réservoir ou d'en sortir, une tige (7) de commande du clapet et des moyens d'actionnement (5) du clapet en fonctionnement normal, c'est-à-dire en-dessous d'une température définie à l'avance, qui actionne le clapet en déplaçant la tige, les moyens d'actionnement (5) du clapet comportant au moins une partie (5) en une matière qui fond à la température définie à l'avance à partir de laquelle on souhaite que le clapet (8) soit en position fermée, **caractérisé en ce que** ladite au moins une partie en une matière qui fond est montée en contact avec la tige de façon que, lorsqu'elle a fondu, la tige se déplace dans la position où elle met le clapet dans la position fermée et les moyens d'actionnement ne peuvent plus actionner le clapet.

2. Robinet suivant la revendication 1, **caractérisé en ce que** les moyens d'actionnement sont constitués d'un levier monté rotatif par rapport à un axe transversal à l'axe de la tige.

3. Robinet suivant l'une des revendications précédentes, **caractérisé en ce que** les moyens d'actionnement, et notamment le levier, sont entièrement en une matière qui fond, notamment en une matière plastique.

4. Robinet suivant la revendication 1, 2 ou 3, **caractérisé en ce que** le robinet comporte une surface (15) de butée avec laquelle coopère la partie en une matière qui fond, et notamment repose contre cette surface de butée à l'état non fondu.

5. Robinet suivant l'une des revendications précédentes, **caractérisé en ce qu'**il est prévu des moyens de rappel destinés à ramener le clapet dans la position fermée, mais réglés de manière à laisser le clapet (8) s'ouvrir sous l'action des moyens d'actionnement ayant la partie en matière qui fond, lorsqu'elle n'est pas non fondue.

6. Robinet suivant la revendication 5, **caractérisé en ce que** les moyens de rappel sont constitués par le poids du clapet.

7. Robinet suivant la revendication 5, **caractérisé en ce que** les moyens de rappel comportent un ressort (4) en compression qui est disposé de manière à appliquer le clapet sur le siège.

8. Robinet suivant l'une des revendications 2 à 7, **caractérisé en ce que** l'axe (6) du levier est déplacé par la rotation du levier entre deux positions, une position dans laquelle le clapet (8) est en la position ouverte et une autre dans laquelle il est en la position fermée.

9. Robinet suivant l'une des revendications 4 à 8, **caractérisé en ce que** le robinet comporte également un bouchon (1) traversé par la tige (7) et recouvrant le clapet, la surface (15) supérieure du bouchon étant sensiblement plane et constituant notamment la surface (15) de butée.

10. Robinet suivant l'une des revendications 2 à 8, **caractérisé en ce que** le levier (5) comporte une surface de roulement, notamment une surface (12) de roulement cylindrique, cette surface (12) cylindrique roulant sur la surface plane supérieure du bouchon pour faire passer le levier de la position fermée à la position ouverte ou réciproquement.

11. Robinet suivant la revendication 10, **caractérisé en ce que** la position de l'axe (6) du levier en la position fermée est plus basse par rapport au clapet que la position de l'axe du levier en la position ouverte.

12. Robinet suivant la revendication 10 ou 11, **caractérisé en ce que** les deux positions de l'axe en la position ouverte et en la position fermée respectivement sont alignées avec l'axe longitudinal de la tige.

13. Robinet suivant la revendication 1, **caractérisé en ce que** les moyens d'actionnement sont constitués d'un manchon taraudé et traversé de bas en haut par la tige, la tige étant filetée et le manchon venant en butée par sa partie basse contre un butoir, notamment la surface (15) du bouchon (1), de sorte que lorsque l'on visse ou dévisse le manchon, la tige monte ou descend et ouvre ou ferme le clapet.

## Claims

1. Valve for a gas tank, comprising a valve element (8) which can assume two positions, a closed position in which it rests on a seat (9) while preventing gas from entering the tank or exiting therefrom and at least one open position in which it is not in contact with the seat in order to allow gas to enter the tank or exit therefrom, a stem (7) for controlling the valve element, and means (5) for actuating the valve element in normal operation, that is to say below a temperature defined in advance, which actuate the valve element by moving the stem, the means (5) for actuating the valve element comprising at least one part (5) made of a material that melts at the temperature defined in advance, starting from which temperature it is desired for the valve element (8) to be in the closed position, **characterized in that** the said at least one part made of a material that melts is mounted in contact with the stem so that, when it has melted, the stem moves into the position in which it places the valve element into the closed position and the actuating means are no longer able to actuate the valve element.

2. Valve according to Claim 1, **characterized in that** the actuating means consist of a lever which is mounted so that it can rotate with respect to an axis which is transverse to the axis of the stem.

3. Valve according to one of the preceding claims, **characterized in that** the actuating means, and especially the lever, are made entirely of a material that melts, especially a plastic.

4. Valve according to Claim 1, 2 or 3, **characterized in that** the valve comprises a stop surface (15) with which the part made of a material that melts cooperates, and in. particular rests against this stop surface in the non-melted state.

5. Valve according to one of the preceding claims, **characterized in that** return means are provided which are intended to bring the valve element back into the closed position but set so as to allow the valve element (8) to open through the action of the actuating means having the part made of material that melts, when it is not melted.

6. Valve according to Claim 5, **characterized in that** the return means are formed by the weight of the valve element.

7. Valve according to Claim 5, **characterized in that** the return means comprise a spring (4) in compression which is arranged so as to press the valve element against the seat.

8. Valve according to one of Claims 2 to 7, **characterized in that** the spindle (6) of the lever is moved by the rotation of the lever between two positions, one position in which the valve element (8) is in the open position and another in which it is in the closed position.

9. Valve according to one of Claims 4 to 8, **characterized in that** the valve also comprises a cap (1) through which the stem (7) passes and which covers the valve element, the upper surface (15) of the cap being substantially planar and constituting in particular the stop surface (15).

10. Valve according to one of Claims 2 to 8, **characterized in that** the lever (5) comprises a rolling surface, in particular a cylindrical rolling surface (12), this cylindrical surface (12) rolling on the upper planar surface of the cap to move the lever from the closed position to the open position, or vice versa.

11. Valve according to Claim 10, **characterized in that** the position of the spindle (6) of the lever in the closed position is lower with respect to the valve element than the position of the spindle of the lever in the open position.

12. Valve according to Claim 10 or 11, **characterized in that** the two positions of the spindle in the open position and in the closed position respectively are aligned with the longitudinal axis of the stem.

13. Valve according to Claim 1, **characterized in that** the actuating means consist of an internally threaded sleeve through which the stem passes upwardly, the stem being threaded and the sleeve butting by its bottom part against a stop, in particular the surface (15) of the cap (1), such that when the sleeve is screwed or unscrewed, the stem moves up or down and opens or closes the valve element.

## Patentansprüche

1. Ventil für einen Gasbehälter, aufweisend: eine Klappe (8), welche zwei Positionen einnehmen kann, eine geschlossene Position, in welcher sie auf einem Sitz (9) ruht, und dabei verhindert, dass Gas in den Behälter eintritt oder aus ihm austritt, und wenigstens eine offene Position, in welcher sie nicht im Kontakt mit dem Sitz ist, um dem Gas zu erlauben, in den Behälter einzutreten, oder aus ihm auszutreten, einen Klappesteuerstab (7) und Vorrichtungen (5) zum Betätigen der Klappe bei Normalbetrieb, das heisst unterhalb einer vorbestimmten Temperatur, welche die Klappe unter Verschieben des Stabes betätigt, wobei die Vorrichtungen (5) zum Betätigen der Klappe wenigstens eine Partie (5) aus einem Material aufweisen, welches bei der vordefinierten Temperatur schmilzt, bei deren Überschreiten man sich wünscht, dass sich die Klappe (8) in der geschlossenen Position befindet, **dadurch gekennzeichnet, dass** die wenigstens eine Partie aus einem Material, welches schmilzt, derart im Kontakt mit dem Stab befestigt ist, dass wenn sie geschmolzen ist, sich der Stab in die Position verschiebt, in welcher er die Klappe in die geschlossene Position versetzt, und die Betätigungs-Vorrichtungen die Klappe nicht mehr betätigen können.

2. Ventil gemäß Anspruch 1, **dadurch gekennzeichnet, dass** die Betätigungs-Vorrichtungen aus einem um eine quer zu der Stab-Achse angeordneten Achse drehbar befestigten Hebel bestehen.

3. Ventil gemäß einem der vorhergehenden Ansprüche, **dadurch gekennzeichnet, dass** die Betatigungs-Vorrichtungen, und insbesondere der Hebel, ganz aus einem Material sind, welches schmilzt, insbesondere aus einem Plastik-Material.

4. Ventil gemäß Anspruch 1, 2 oder 3, **dadurch gekennzeichnet, dass** das Ventil eine Anschlag-Fläche (15) aufweist, mit welcher die Partie aus einem Material, welches schmilzt, zusammenwirkt, und insbesondere im nicht-geschmolzenen Zustand auf dieser Anschlag-Fläche ruht.

5. Ventil gemäß einem der vorhergehenden Ansprüche, **dadurch gekennzeichnet, dass** Rückstell-Vorrichtungen vorgesehen sind, welche dazu dienen, die Klappe in die geschlossene Position zurückzubringen, aber derart gesteuert/geregelt sind, dass sie die Klappe (8) sich unter der Wirkung der die Partie aus schmelzendem Material aufweisenden Betätigungs-Vorrichtungen öffnen lassen, wenn sie nicht geschmolzen ist.

6. Ventil gemäß Anspruch 5, **dadurch gekennzeichnet, dass** die Rückstell-Vorrichtungen aus den Gewichten der Klappe bestehen.

7. Ventil gemäß Anspruch 5, **dadurch gekennzeichnet, dass** die Rückstell-Vorrichtungen eine Kompressions-Feder (4) aufweisen, welche dazu vorgesehen ist, die Klappe auf den Sitz zu bringen.

8. Ventil gemäß einem der Ansprüche 2 bis 7, **dadurch gekennzeichnet, dass** die Achse (6) des Hebels durch die Drehung des Hebels zwischen zwei Positionen verschoben wird, einer Position, in welcher die Klappe (8) sich in einer offenen Position befindet, und einer anderen, in welcher sie sich in einer geschlossenen Position befindet.

9. Ventil gemäß einem der Ansprüche 4 bis 8, **dadurch gekennzeichnet, dass** das Ventil gleichermaßen einen von dem Stab (7) durchquerten, die Klappe abdeckenden Stopfen (1) aufweist, wobei die obere Fläche (15) des Stopfens im Wesentlichen eben ist, und insbesondere die Anschlagfläche (15) bildet.

10. Ventil gemäß einem der Ansprüche 2 bis 8, **dadurch gekennzeichnet, dass** der Hebel (5) eine Rollfläche aufweist, insbesondere eine zylinderförmige Rollfläche, wobei die zylinderförmige Fläche (12) auf der oberen ebenen Fläche des Stopfens abrollt, um den Hebel von der geschlossenen Position in die offene Position oder umgekehrt übergehen zu lassen.

11. Ventil gemäß Anspruch 10, **dadurch gekennzeichnet, dass** die Position der Achse (6) des Hebels in der geschlossenen Position gegenüber der Klappe tiefer angeordnet ist, als die Position der Achse des Hebels in der geöffneten Position.

12. Ventil gemäß Anspruch 10 oder 11, **dadurch gekennzeichnet, dass** die zwei Positionen der Achse in der geöffneten Position beziehungsweise in der geschlossenen Position mit der Longitudinalachse des Stabes ausgerichtet sind.

13. Ventil gemäß Anspruch 1, **dadurch gekennzeichnet, dass** die Betätigungs-Vorrichtungen aus einer Kappe bestehen, welche mit Gewinde versehen ist und von unten nach oben von dem Stab durchquert wird, wobei der Stab ein Gewinde aufweist, und wobei die Kappe mit ihrer unteren Partie gegen einen Puffer, insbesondere die Fläche (15) des Stopfens (1), derart in Anschlag kommt, dass wenn man die Kappe anschraubt oder abschraubt, sich der Stab hebt oder senkt, und die Klappe öffnet oder schließt.
